Europäisches Patentamt

European Patent Office

Office européen des brevets

(19)

(11) **EP 1 134 969 A1**

(12) **EUROPEAN PATENT APPLICATION**

(43) Date of publication:
**19.09.2001  Bulletin 2001/38**

(51) Int Cl.⁷: **H04N 5/208**
// G06T5/20

(21) Application number: **00200888.6**

(22) Date of filing: **13.03.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **Koninklijke Philips Electronics N.V.**<br>**5621 BA Eindhoven (NL)** | (72) Inventor: **Jaspers, C.A.M.**<br>**c/o Intern. Octrooibureau B.V.**<br>**5656 AA EINDHOVEN (NL)**<br><br>(74) Representative: **Steenbeek, Leonardus Johannes**<br>**INTERNATIONAAL OCTROOIBUREAU B.V.,**<br>**Prof. Holstlaan 6**<br>**5656 AA Eindhoven (NL)** |

(54) **Picture improvement**

(57)    In a method of picture signal improvement, an input picture signal (Yin) is filtered (lpf, S) to obtain a high-frequency component (Yin-Ylpf) and a low-frequency component (Ylpf), a standard deviation signal (SD) is calculated from the input picture signal (Yin), the high-frequency component (Yin-Ylpf) is gain controlled (MS, MP) in dependence upon the standard deviation signal (SD) to obtain a gain-controlled high-frequency component (Gcntr*Ghpf * (Yin-Ylpf)), and the gain-controlled high-frequency component (Gcntr*Ghpf * (Yin-Ylpf)) and the low-frequency component (Ylpf) are combined (A) to obtain an output signal (Yout).

FIG. 1

## Description

SU-A-1099418 discloses a TV gradation distortions corrector that has outputs from differentiating circuits thresholded for coincidence gate controlling switching of signal free from noise components. The input TV signal is fed to the delay line and low-pass filters. The h.f. component signal passes to the commentator, and the l.f. component signal to the additional adder. There is no need for non-linear processing of signals from details for which the peak-to-peak amplitude of the video signals exceeds three times the standard deviation of the noise level. The commutator is controlled by the thresholds and coincidence gate so that the components are eliminated. Use/advantage: in communications engineering, to increase the definition and sharpness of details of the dark parts of an image, so increasing accuracy of correction.

EP-A-0,560,170 discloses a method for sharpness enhancement, whereby correction values derived from the difference between spatially neighbored pixel values are combined with the pixel values, in which the correction values are calculated according to a non-linear function of the difference values, and the pixel values are modified only if at minimum one of the surrounding pixels is correlated with the actual pixel, whereby the correction values are limited to a maximum correction value, and the correction value is added to and subtracted from, respectively, the neighboring pixels in a symmetrical way to improve the appearing sharpness of the resulting transition.

It is, inter alia, an object of the invention to provide a sharpness increase in such a manner that noise in reduced. To this end, the invention provides a picture improvement as defined in the independent claims. Advantageous embodiments are defined in the dependent claims.

In a method of picture signal improvement in accordance with a first aspect of the invention, an input picture signal is filtered to obtain a high-frequency component and a low-frequency component, a standard deviation signal is calculated from the input picture signal, the high-frequency component is gain controlled in dependence upon the standard deviation signal to obtain a gain-controlled high-frequency component, and the gain-controlled high-frequency component and the low-frequency component are combined to obtain an output signal.

These and other aspects of the invention will be apparent from and elucidated with reference to the embodiments described hereinafter.

In the drawings:

Fig. 1 shows an embodiment of a camera comprising a circuit for local sharpness increase and noise reduction;
Fig. 2 shows a standard deviation membership function; and
Fig. 3 shows the composition of the output signal as a function of a gain control signal via the standard deviation membership.

Usually the noise increase of sharpness improvement filters is limited by means of a so-called coring function that only enhances sharpness variations stepping across a certain noise-related level. As a result the amount of noise in the sharpened output signal will increase or in the best case be remained.

This disclosure describes a sharpness improvement filter that is able to decrease the noise in the final output signal. For this purpose a special sharpness filter is needed that is controlled by a so-called standard deviation measurement function that is representative of local noise. The specific combination of that filter and the standard deviation function controls the amount of noise reduction as well as the amount of sharpness. In this manner, noise is reduced in large areas while sharpness is improved at detected transients exceeding a certain magnitude. This local noise reduction method is suited for one- and two-dimensional sharpness filtering in digital electronic still cameras.

Next the basics are explained of a specific contour filter that is able to control the sharpness as well as the local noise reduction. This filter has be controlled on such a way that at very small edges the input signal is low-pass filtered and that at larger edges the filter starts acting as a contour filter. The range of the very small edges is supposed to be within the effective noise signal amplitude. The result is then a local noise reduction by reducing the high frequency components via the low-pass function of that specific contour filter.

The control of the amount of sharpness as well as local noise reduction by that specific contour filter starts with the realization of a so-called standard deviation (SD) signal. Processed within a one- or two-dimensional pixel array, the SD signal can be regarded as a measure for the local noise in the picture. Then, via a so-called membership function MS, the SD signal is converted to a gain control signal Gcntr that for that specific contour filter executes the amount of sharpness and local noise reduction.

The local noise reduction method is very suited to replace the conventional coring. It has the advantage that it is able to improve the signal-to-noise ratio of the final output signal. Depending on the use of a one- or two-dimensional contour filter, on the adjustments of the noise reduction part and the picture quality acceptance, the improvement of the signal-to-noise ratio can reach from 3 till 8 dB.

The low-pass filter component of the specific contour filter determines the maximum amount of high-frequency noise reduction. The low-frequency noise remains unaffected. For still pictures it holds that low-frequency noise is hardly visible while high-frequency noise is. This makes the method of local control of sharpness and noise as described in this disclosure especially attractive for still picture camera applications.

The idea of a contour or sharpness filter suited for local noise reduction is that two signals are available: the input signal and a low-pass filtered input signal. With those two signals a sharpened output signal can be realized as follows:

$$Yout = Ghpf*Yin + (1-Ghpf)*Ylpf \qquad [1]$$

in which Yout and Yin are the output and input signals, Ylpf is a low-pass filtered Yin signal, and Ghpf is a gain control for the amount of contour. Formula [1] can be rewritten as:

$$Yout = Ghpf*(Yin - Ylpf) + Ylpf \qquad [2]$$

The part (Yin-Ylpf) acts as a high-pass filter, so as contour signal.
For the output signal as function of Ghpf it holds that:

if Ghpf = 0 then Yout = Ylpf: the output image is a low-pass filtered image with less noise,
if Ghpf = 1 then Yout = Yin: the output image is equal to the input image with the same amount of noise, and
for Ghpf > 1 the output image is the input image plus a certain amount of contour and extra noise.

The latter statement makes exactly clear what Ghpf should be used for: the control for the amount of contour only. This means that a local gain parameter has to be found which, as function of the local measured noise, controls the performance of the filter in combination with Ghpf. This parameter is called Gcntr and makes it possible to rewrite formula [2] as:

$$Yout = Gcntr* Ghpf*(Yin - Ylpf) + Ylpf \qquad [3]$$

For the output signal as function of Gcntr*Ghpf this means that:

if Gcntr* Ghpf = 0 then Yout = Ylpf

if Gcntr* Ghpf = 1 then Yout = Yin

if Gcntr* Ghpf > 1 then formula [3] applies \qquad [4]

If 0 < Gcntr*Ghpf <= 1 then Yout is faded between Ylpf and Yin as function of Gcntr*Ghpf. Before further elucidating the consequences of formula [3] and [4], it will be explained first how Gcntr is realized.

The realization of the control parameter Gcntr for contour with local noise reduction starts with the measurement of the standard deviation (SD) in the active image with a one- or two-dimensional (1D or 2D) local array. Via a low-pass filter, which can be the same one as applied for the contour signal according formula [3], the image is averaged. Next, over all center pixels, the cumulative absolute value is calculated of the difference between the local average value and each center pixel. Here follows the software algorithm for the calculation of a 1D SD signal:

{ low-pass filtered value by averaging n horizontal pixels }

Ylpf = 0

for i = -nf/2 to nf/2 do          { nf = the number of taps of the LPF }

Ylpf = Ylpf + Y[a+i]          { a = the address of the center pixel }

Ylpf = Ylpf/nf


{ standard deviation }

SD = 0          { n <= nf }

for i = -n/2 to n/2 do          { n = the number of taps for SD }

SD = SD + abs(Ylpf-Y[a+i]) { cumulative SD value }

SD = 2*SD/n          { amplitude adaption of SD }

if SD > maxSD then SD=maxSD { limit amplitude of SD to maxSD}


In the same way the software algorithm for a 2D SD signal can be written:


{ Ylpf is calculated over a rectangle of nf x mf horizontal and vertical pixels }

Ylpf = 0

for i = -mf/2 to mf/2 do          { mf = the number of vertical taps of the array }

for j = -nf/2 to nf/2 do          { nf=the number of horizontal taps of the array }

Ylpf = Ylpf + Y[a[i]+j]     { a[i]+j = address of center pixels }

Ylpf = Ylpf/(nf x mf)


{the standard deviation is calculated for n horizontal and m vertical center pixels}

SD = 0          { n<=nf and m<=mf }

for i = -m/2 to m/2 do          { SD in vertical direction }

SD = SD + abs(Ylpf-Y[a[i])

for j = -n/2 to n/2 do          { SD in horizontal direction except }

if j <> 0 then          { center pixel (used in V-direction }

SD = SD + abs(Ylpf-Y[a[0]+j]) { a[0] is address of center pixel }

SD = 2*SD/(n+m-1)          { amplitude adaption of SD }

if SD > maxSD then SD=maxSD { limit amplitude of SD to maxSD }


The value of SD can be regarded as a measure for the local amount of noise in the image. This is however only valid for very small signal amplitudes near the noise level. That is why in case of larger and steep edges, the SD value is limited to maxSD.

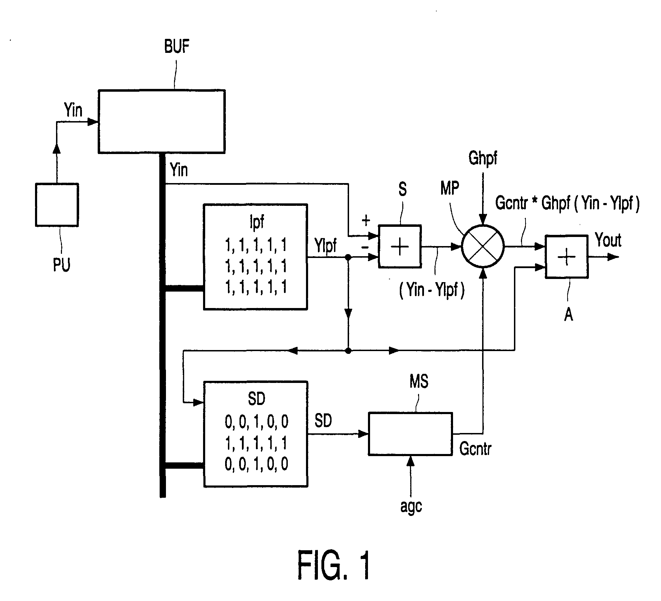

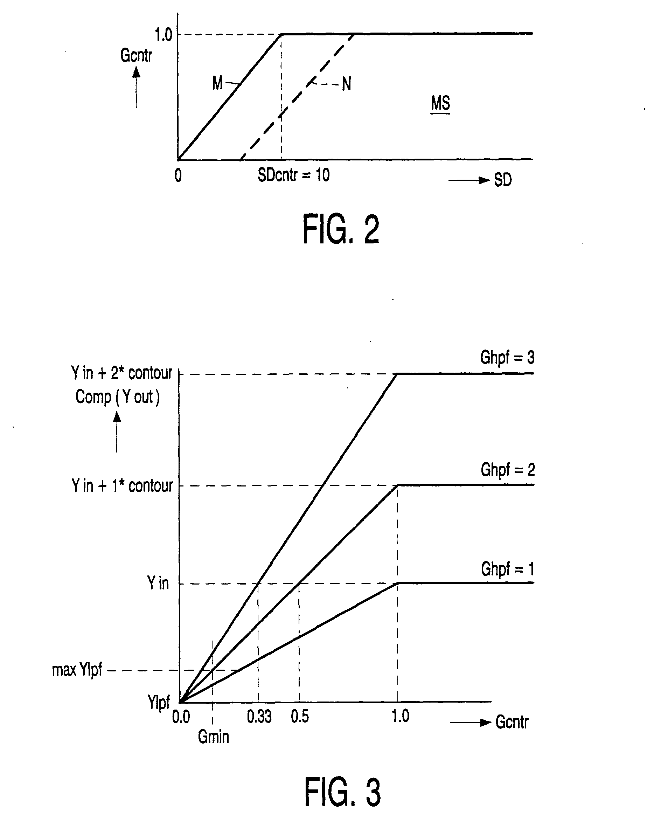

Fig. 1 shows a typical block diagram of local sharpness improvement and local noise reduction with a low-pass filter (LPF) array of nxm pixels. The input signal Yin from a picture signal pick-up device PU is applied to a buffer BUF that applies the input signal to a low-pass filter LPF and to a standard deviation calculation device SD. A subtracter S subtracts the low-pass filtered input signal Ylpf from the input signal to obtain the contour signal Yin-Ylpf. A membership function (see Fig. 2) calculated the control signal Gcntr from the standard deviation signal SD. A multiplier MP multiplies the contour signal Yin-Ylpf by Ghpf and Gcntr to obtain Gcntr*Ghpf*(Yin-Ylpf). An adder A adds this enhanced high-frequency component to the low-pass filtered signal Ylpf to obtain the output signal Yout.

The applied low-pass filter LPF and the standard deviation calculation device SD concern a 5x3 array, but other array sizes will be no problem (for example 5x5 or 6x6 etc.). The LPF also has unity weights over the whole filter array, but of course other low-pass filter types are possible as well. For example a 5x5 LPF with the following weights and filter procedure:

$$w[11]=0; \; w[12]=1; \; w[13]=2; \; w[14]=1; \; w[15]=0;$$
$$w[21]=1; \; w[22]=2; \; w[23]=4; \; w[24]=2; \; w[25]=1; \quad \{ \text{filter weights} \}$$
$$w[31]=2; \; w[32]=4; \; w[33]=8; \; w[34]=4; \; w[35]=2;$$
$$w[41]=1; \; w[42]=2; \; w[43]=4; \; w[44]=2; \; w[45]=1;$$
$$w[51]=0; \; w[52]=1; \; w[53]=2; \; w[54]=1; \; w[55]=0;$$

$$w[51]=0; \; w[52]=1; \; w[53]=2; \; w[54]=1; \; w[55]=0;$$

$$Ylpf = 0 \quad\quad\quad\quad\quad\quad\quad \{ \text{filter procedure} \}$$
$$\text{for } i = 1 \text{ to } 5 \text{ do}$$
$$\quad \text{for } j = 1 \text{ to } 5 \text{ do}$$
$$\quad\quad Ylpf = Ylpf + w[(i*10)+j)])*Y[a[i-3]+j-3] \quad\quad \{[a[0]+0] = \text{address of center pixel}\}$$
$$Ylpf = Ylpf/48 \quad\quad\quad\quad\quad\quad\quad \{ \text{divide Ylf by sum of filter weights} \}$$

The measured SD value is offered to a so-called membership function that adapts the local gain parameter Gcntr for small SD values only. See the uninterrupted line M in Fig. 2 for an example of the transfer of the membership function MS as function of SD. For SD values smaller than SDcntr, here 10 on a scale of 256 (8 bit), the local noise reduction by means of Gcntr will start (see also formula [3]).

If the input signal becomes rather noisy it is possible to shift the membership function to the right. See the dashed diagonal line N in Fig. 2. In that case the local noise reduction will start at a value larger than SDcntr. For the shift of the membership function MS, the noise can be measured in the optical black part of the image sensor. The noise in the optical black part should be prevented from being clipped during the processing, because then the noise measurement has become invalid. Also the automatic gain control (agc) parameter of the camera can be used for shifting the membership function MS. In a well-designed camera the noise increase as function of the agc will be known.

Therefore the software algorithm for the membership function is as follows:

{ first SD is reduced as function of the measured noise 'nseff' of the image (or an equivalent of the agc) }

$$SD = SD - Gmemns*nseff \quad \{ \text{Gmemns=adaptation of noise reduction} \}$$
$$\text{if } SD < 0 \text{ then } SD = 0 \quad \{ \text{prevent } SD < 0 \text{ from occurring} \}$$

{ the contour gain as function of the membership: }

$$Gcntr = membership[SD]$$

{limitation of Gcntr to Gmin}

$$\text{if } (Gcntr < Gmin) \text{ then } Gcntr = Gmin$$

For SD values smaller than SDcntr the contour gain will decrease proportionally to zero. As a consequence a certain amount of contour, even at small contour signals will remain, especially if has been prevented that Gcntr becomes zero. The last software rule limits Gcntr to Gmin what will delay the visibility of the well-known "plastic" effect in comparison with coring.

In Fig. 3 a stylistic transfer is drawn of the output signal Yout of formula [3] as function of the contour gain Ghpf and the local noise reduction parameter Gcntr, with the conditions as mentioned in [4]. The horizontal axis shows Gcntr from 0.0 till 1.0. In the vertical direction the composition comp(Yout) of Yout (i.e. not the amplitude of Yout but the type of signal Yout will be composed of) is shown as function of Gcntr and three different Ghpf values. For example, if Gcntr = 0, then according to formula [3] Yout is equal to Ylpf in the lower left comer of Fig. 3. Suppose that Ghpf = 2, then for Gntr = 0.5, Yout has become equal to Yin and for Cntr = 1, Yout will become equal to Yin plus the full contour signal.

The transfer characteristic of Fig. 3 makes clear that:

1. the intersection point where Yout = Yin is determined by Ghpf. For an arbitrary Ghpf value, which in any case has to be larger than one, this point is reached for Gcntr = 1/Ghpf. So if Gcntr < 1/Ghpf then the low-pass filtering will start and as a consequence an improvement of the signal-to-noise ratio with respect to the input signal. If Gcntr < 1 and Gcntr > 1/Ghpf then from 1 to 1/Ghpf the amount of contour will be reduced, which also results in less noise in comparison with the full contour signal. If Gcntr > 1 then the full contour signal and its noise amplification will be added to Yout.

2. the Gmin level can be made independent of Ghpf if it has become inverse proportional to Ghpf. At an arbitrary Ghpf value, the minimum acceptable Gmin level can be determined. That is to say the maximum amount of low-pass filtering that from a perception point of view is acceptable. This amount of low-pass filtering corresponds with the max Ylfp line in Fig. 3. In order to maintain that heuristic determined level for other Ghpf values, the following software rule can offer this:

$$Gmin = Gminorg*Ghpforg/Ghpf,$$

in which Gminorg and Ghpforg are the original Gmin and Ghpf values at which maxYlpf has been determined.

3. as function of the measured noise level, Ghpf can be reduced till one. This means for example that according to Fig. 3, Ghpf will be faded from the Ghpf = 2 curve to the one for Ghpf = 1 (with automatic adaptation of Gmin as mentioned under point 2). The software description for reduction of Ghpf as function of the measured noise nseff is:

$$\text{if nseff} < \text{nsmax then Ghpf} = (Ghpf*(nsmax-nseff) - nseff)/nsmax$$

The parameter nsmax is the maximum noise where Ghpf should become one. For nseff = 0 Ghpf will be maintained.

Salient features of the present invention are:

1. The specific contour filter that is able to improve the signal-to-noise ratio of an image via a local gain parameter Gcntr.

2. The realization of the parameter Gcntr by measuring the local noise via the standard deviation method which next is transformed to Gcntr via a specific membership function.

3. The shift of the membership transfer as function of the global measured noise or as function of the camera automatic gain control (agc).

4. The definition of a once defined maximum influence of the low-pass filter to variations of the contour amplification parameter Ghpf.

5. The reduction of the contour amplification parameter Ghpf to unity as function of the global measured noise or as function of the camera automatic gain control (agc).

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A method of picture signal improvement, the method comprising the steps of:

   filtering (lpf, S) an input picture signal (Yin) to obtain a high-frequency component (Yin-Ylpf) and a low-frequency component (Ylpf);
   calculating a standard deviation signal (SD) from the input picture signal (Yin);
   gain controlling (MS, MP) the high-frequency component (Yin-Ylpf) in dependence upon the standard deviation signal (SD) to obtain a gain-controlled high-frequency component (Gcntr*Ghpf * (Yin-Ylpf)); and
   combining (A) the gain-controlled high-frequency component (Gcntr*Ghpf * (Yin-Ylpf)) and the low-frequency component (Ylpf) to obtain an output signal (Yout).

2. A method as claimed in claim 1, wherein the gain controlling step (MS, MP) comprises the step of gain controlling (MS, MP) the high-frequency component (Yin-Ylpf) in dependence upon the standard deviation signal (SD) and an amount of noise to obtain the gain-controlled high-frequency component (Gcntr*Ghpf * (Yin-Ylpf)).

3. A device for picture signal improvement, the device comprising:

   means for filtering (lpf, S) an input picture signal (Yin) to obtain a high-frequency component (Yin-Ylpf) and a low-frequency component (Ylpf);
   means for calculating a standard deviation signal (SD) from the input picture signal (Yin);
   means for gain controlling (MS, MP) the high-frequency component (Yin-Ylpf) in dependence upon the standard deviation signal (SD) to obtain a gain-controlled high-frequency component (Gcntr*Ghpf * (Yin-Ylpf)); and
   means for combining (A) the gain-controlled high-frequency component (Gcntr*Ghpf * (Yin-Ylpf)) and the low-frequency component (Ylpf) to obtain an output signal (Yout).

4. A still picture camera, comprising:

   an image pick-up device (PU) to obtain an input picture signal (Yin); and
   a device for improving the input picture signal (Yin) as claimed in claim 3.

FIG. 1

FIG. 2

FIG. 3

## EUROPEAN SEARCH REPORT

**European Patent Office**

Application Number

EP 00 20 0888

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 398 861 A (POLAROID CORPORATION) 22 November 1990 (1990-11-22) * page 2, line 49 - page 9, column 29 * --- | 1-4 | H04N5/208 //G06T5/20 |
| X | WO 90 07751 A (EASTMAN KODAK COMPANY) 12 July 1990 (1990-07-12) * page 4, line 1 - page 10, line 34 * --- | 1-3 | |
| X | US 4 571 635 A (MAHMOODI A. ET AL) 18 February 1986 (1986-02-18) * column 3, line 51 - column 6, line 38 * --- | 1-3 | |
| A | US 4 794 531 A (MORISHITA K. ET AL) 27 December 1988 (1988-12-27) * column 5, line 6 - column 9, line 23 * --- | 1-3 | |
| A | EP 0 280 412 A (PICKER INTERNATIONAL INC.) 31 August 1988 (1988-08-31) * the whole document * --- | 1-3 | |
| A | EP 0 352 016 A (MINNESOTA MINING AND MANUFACTURING COMPANY) 24 January 1990 (1990-01-24) * the whole document * ----- | 1-3 | TECHNICAL FIELDS SEARCHED (Int.Cl.7) H04N G06T |

The present search report has been drawn up for all claims

| Place of search | Date of completion of the search | Examiner |
|---|---|---|
| THE HAGUE | 25 August 2000 | Verschelden, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 00 20 0888

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2000

| Patent document cited in search report | | Publication date | Patent family member(s) | | Publication date |
|---|---|---|---|---|---|
| EP 0398861 | A | 22-11-1990 | US | 5038388 A | 06-08-1991 |
| | | | AT | 144636 T | 15-11-1996 |
| | | | AU | 619971 B | 06-02-1992 |
| | | | AU | 5324490 A | 15-11-1990 |
| | | | CA | 2013750 A | 15-11-1990 |
| | | | DE | 69028946 D | 28-11-1996 |
| | | | DE | 69028946 T | 17-04-1997 |
| | | | DE | 398861 T | 21-03-1991 |
| | | | GR | 90300197 T | 10-10-1991 |
| | | | JP | 3004680 A | 10-01-1991 |
| WO 9007751 | A | 12-07-1990 | DE | 68923873 D | 21-09-1995 |
| | | | DE | 68923873 T | 02-05-1996 |
| | | | EP | 0406382 A | 09-01-1991 |
| | | | JP | 3502975 T | 04-07-1991 |
| US 4571635 | A | 18-02-1986 | DE | 3582258 D | 02-05-1991 |
| | | | EP | 0153167 A | 28-08-1985 |
| | | | JP | 2551552 B | 06-11-1996 |
| | | | JP | 60192482 A | 30-09-1985 |
| US 4794531 | A | 27-12-1988 | JP | 2515737 B | 10-07-1996 |
| | | | JP | 62251978 A | 02-11-1987 |
| | | | JP | 61112285 A | 30-05-1986 |
| | | | JP | 1612722 C | 30-07-1991 |
| | | | JP | 2036028 B | 15-08-1990 |
| | | | JP | 61112286 A | 30-05-1986 |
| EP 0280412 | A | 31-08-1988 | US | 4761819 A | 02-08-1988 |
| | | | DE | 3852112 D | 22-12-1994 |
| | | | DE | 3852112 T | 06-04-1995 |
| | | | JP | 2939749 B | 25-08-1999 |
| | | | JP | 63253481 A | 20-10-1988 |
| EP 352016 | A | 24-01-1990 | US | 4941190 A | 10-07-1990 |
| | | | CA | 1309502 A | 27-10-1992 |
| | | | DE | 68914206 D | 05-05-1994 |
| | | | DE | 68914206 T | 06-10-1994 |
| | | | IL | 90654 A | 21-06-1992 |
| | | | JP | 2073477 A | 13-03-1990 |

EPO FORM P0459

For more details about this annex : see Official Journal of the European Patent Office, No. 12/82